(19) Europäisches Patentamt
European Patent Office
Office européen des brevets

(11) **EP 1 524 873 A2**

(12) **EUROPEAN PATENT APPLICATION**

(43) Date of publication:
**20.04.2005 Bulletin 2005/16**

(51) Int Cl.⁷: **H04Q 7/38**

(21) Application number: **04024669.6**

(22) Date of filing: **15.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.10.2003 KR 2003072222**

(71) Applicants:
- **Samsung Electronics Co., Ltd.**
  **Suwon-si, Gyeonggi-do (KR)**
- **Korea Advanced Institute of Science and Technology (KAIST)**
  **Daejon (KR)**

(72) Inventors:
- **Hwang, Pil-Yong, Samsung Electronics Co., Ltd.**
  **Suwon-si, Gyeonggi-do (KR)**
- **Lee, In-Sun, Samsung Electronics Co., Ltd.**
  **Suwon-si, Gyeonggi-do (KR)**
- **Park, Chi-Hyun, Samsung Electronics Co., Ltd.**
  **Suwon-si, Gyeonggi-do (KR)**

- **Jang, Kyung-Hun,**
  **Samsung Electronics Co., Ltd.**
  **Suwon-si, Gyeonggi-do (KR)**
- **Yoon, Hyun-Soo,**
  **Korea Adv.Inst. of Sc. and Tech.**
  **Yusong-gu, Daejon (KR)**
- **Lee, Yong-Hoon,**
  **Korea Adv.Inst. of Sc. and Tech.**
  **Yusong-gu, Daejon (KR)**
- **Shin, Won-Yong,**
  **Korea Adv.Inst. of Sc. and Tech.**
  **Yusong-gu, Daejon (KR)**
- **Kim, Nam-Gi, Korea Adv.Inst. of Sc. and Tech.**
  **Yusong-gu, Daejon (KR)**
- **Choi, Hye-Eun, Korea Adv.Inst. of Sc. and Tech.**
  **Yusong-gu, Daejon (KR)**

(74) Representative: **Grünecker, Kinkeldey, Stockmair & Schwanhäusser Anwaltssozietät**
**Maximilianstrasse 58**
**80538 München (DE)**

(54) **Seamless handover method in an FH-OFDM-based mobile communication system**

(57) A handoff method in a mobile communication system using frequency hopping-orthogonal frequency division multiplexing (FH-OFDM). A mobile host predicts a handoff according to strength of transmission power of a currently serving base station, reserves a physical channel required for the handoff associated with at least one candidate base station, selects a handoff target base station from the at least one candidate base station, releases a channel with the serving base station, and performs data communication with the target base station through the reserved physical channel.

FIG.5

EP 1 524 873 A2

**Description**

The present invention relates generally to a mobile communication system based on frequency hopping-orthogonal frequency division multiplexing (FH-OFDM), and more particularly to a rapid, seamless handover method without data loss in a mobile communication system based on FH-OFDM.

Conventionally, orthogonal frequency division multiplexing (OFDM) has been utilized in various wired/wireless applications by modulation and multiple access technologies for the past 20 years. Recently, various research is being conducted in order to apply OFDM to commercial communication systems. OFDM is employed in various digital subscriber lines (DSLs) in a wired field. In a wireless field, OFDM is employed in various television and radio broadcast applications based on the European digital broadcast television standard as well as digital radio in North America. Accordingly, OFDM is applied to many fixed wireless systems and wireless local area networks (LANs).

However, OFDM in a mobile communication system can be regarded as a combination of modulation and multiple access techniques that divide one communication channel shared between a plurality of users and employ the divided channel. Time division multiple access (TDMA) is based on time division, code division multiple access (CDMA) is based on code division with spreading codes, and OFDM is based on frequency division.

In OFDM, a frequency spectrum is divided into lower channels having a plurality of equivalent intervals, such that each channel carries user data. OFDM can be illustrated similarly to frequency division multiplexing. OFDM has an important characteristic in that each channel is orthogonal to all other channels. The user data is modulated in a state in which amplitude, phase, or both the amplitude and phase are controlled, and the modulated user data is transmitted.

Frequency hopping-orthogonal frequency division multiplexing (FH-OFDM) implements a spread spectrum system in the form of mixed OFDM and frequency hopping. In this case, merits of frequency diversity and CDMA interference averaging can be realized.

When a mobile host moves from one service area of one base station receiving current service to another service area of another base station in a mobile communication system, as is well known, a handoff is performed. In an FH-OFDM based mobile communication system, a hard handoff is performed. Because the mobile host cuts off a connection with the current base station and then establishes a connection with a new base station during the hard handoff, communication temporarily stops during the handoff and data loss can occur. In real-time traffic, the quality of service (QoS) is degraded.

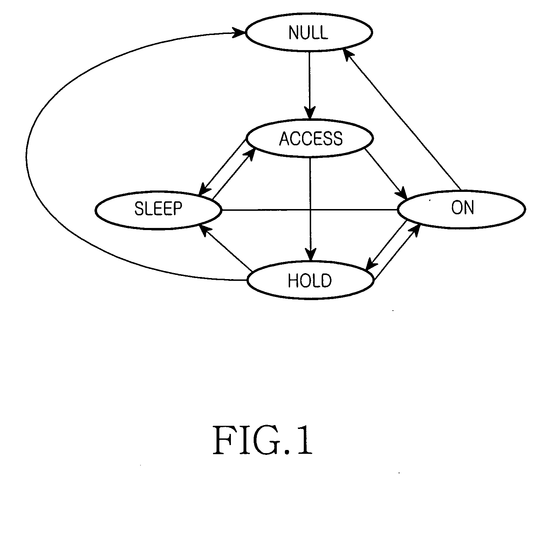

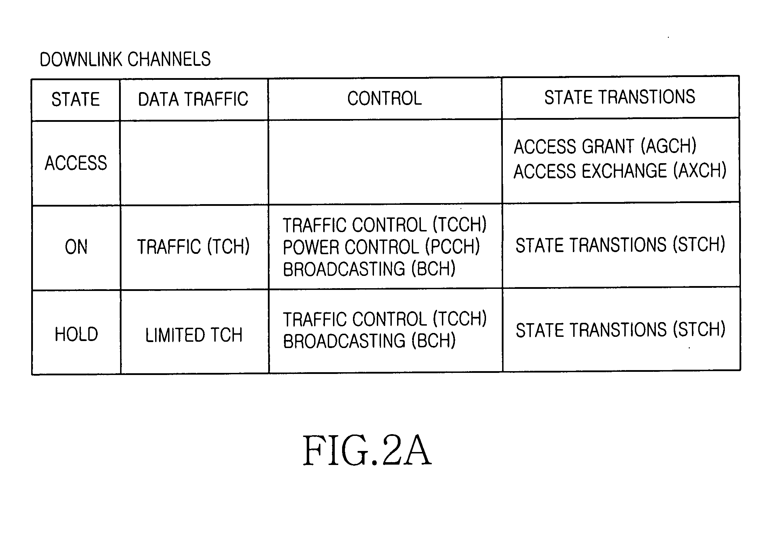

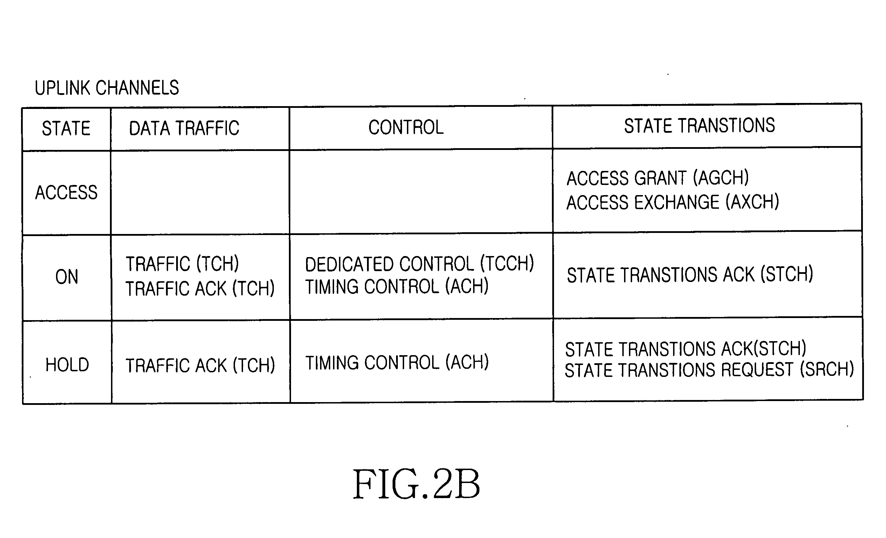

FIG. 1 illustrates a state transition diagram of a media access control (MAC) layer at a handoff in a conventional mobile communication system based on frequency hopping-orthogonal frequency division multiplexing (FH-OFDM). As illustrated in FIG. 1, a data channel is assigned through an ACCESS state in which a mobile host (MH) performs a handoff in an ON or HOLD state corresponding to an active state in the conventional FH-OFDM based mobile communication system. Because the MH must contend with other MHs for channel assignment in the ACCESS state, delay is incurred. More specifically, a communication cut-off phenomenon occurs, as the terminal is not connected to any base station. In each MAC state, downlink and uplink channels assigned for the handoff are illustrated in the tables of FIGS. 2A and 2B.

Referring to FIG. 2A, in the down link "access state" an access grant channel (AGCH) and an access exchange channel (AXCH) are allocated for state transition. In the "on state", a traffic channel (TCH) for data traffic and various control channels such as traffic control channel (TCCH), power control channel (PCCH), and broadcast channel (BCH) for control signals, and a state transition channel (STCH) are allocated. In the meantime, a limited TCH for traffic, TCCH and BCH for control, and STCH for state transition are allocated in the "hold state".

Referring to FIG. 2B, the uplink channels used in MAC states are as follow. Only the access channel (ACH) and access exchange channel (AXCH) are allocated for the state transition in the "access state"; the TCH and traffic ACK channel (TACH) for the data traffic, a dedicated control channel (DCCH) and a timing control channel (ACH) for control channel, and the STCH for the state transition are allocated in the "on state"; and the TACH, ACH, and SACH and a state transition request channel (SRCH) for the state transition are allocated in the "hold state."

To mitigate the communication cut-off phenomenon, the conventional FH-OFDM based mobile communication system enables a $3^{rd}$ layer to compensate for a handoff delay of a $2^{nd}$ layer, while carrying out the channel assignment.

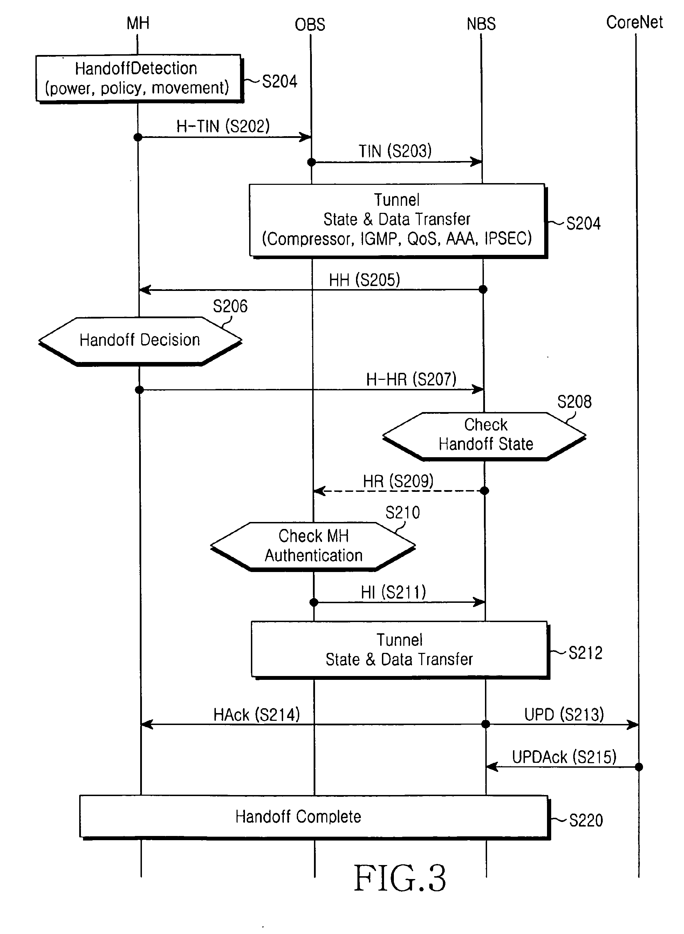

FIG. 3 is a message flow chart illustrating a handoff process in the conventional FH-OFDM based mobile communication system. In FIG. 3, a mobile host (MH) classifies an MH-controlled handoff process into forward and reverse handoff steps.

As illustrated in FIG. 3, the MH monitors a strength of a signal from a base station currently connected thereto, a signal to noise ratio (SNR), etc. If a parameter value associated with the signal strength or SNR is small, it is determined that a handoff is required in step S201. When a new base station (NBS) to perform the handoff can be predicted in advance, the MH transmits a host tunnel initiation (H-TIN) message to an old base station (OBS) currently connected thereto in step S202.

When the H-TIN message is received, the OBS transmits a tunnel initiation (TIN) message to the NBS to perform the handoff in step S203. A tunnel is set up between the OBS and the NBS in step S204.

After the tunnel is set up, the NBS receiving the TIN message determines whether it can accommodate the handoff. If it is determined that the NBS can accommodate the handoff, the NBS transmits a handoff hint (HH) message to notify the MH of the fact that a preparation necessary for the handoff has been made in step S205. The MH receiving the HH message determines a handoff target base station in step S206 and completes a forward handoff in step S220. A determination is made as to whether the forward handoff has occurred in the course of a reverse handoff and hence a handoff compensation operation is required if the forward handoff process has not been made.

When the MH does not recognize the NBS in advance, the reverse handoff process is performed. That is, when the forward handoff occurs, the handoff is completely performed.

In the reverse handoff process, the MH transmits a host handoff request (H-HR) message to the NBS in step S207. The NBS receiving the H-HR message checks a handoff state in step S208. If it is determined that the forward handoff process has been performed, the reverse handoff process is skipped. However, if the forward handoff process has not been performed, the NBS transmits a handoff request (HR) message to the OBS currently connected to the MH in step S209.

The OBS receiving the HR message transmits a handoff initiation (HI) message to the handoff target base station NBS in step S211, after performing MH authentication in step S210. A tunnel is set up between the OBS and the NBS in step S212.

When the MH authentication fails, the NBS to perform the handoff transmits a handoff denial (HD) message. The NBS receiving the HD message repeatedly transmits the HR message to the serving base station OBS until the NBS receives the HI message. As the NBS receives the HI message, the tunnel is set up between the serving base station OBS and the handoff target base station NBS.

If the tunnel has been set up, the handoff target base station NBS transmits an update route (UPD) message to the OBS through a core network CoreNet in step S213, and transmits a handoff acknowledgement (HAck) message to the MH in step S214. As the OBS receiving the UPD message transmits an update acknowledgement (UPDAck) message to the NBS in step S215, the handoff is completed in step S220.

After the tunnel is set up in the handoff method, the serving base station OBS and the handoff target base station NBS exchange data or control information necessary for the handoff through the tunnel in advance, thereby reducing handoff delay. However, there still is an inevitable delay in an access process in which a corresponding MH contends with other MHs for a channel of the NBS. More specifically, in case of delay sensitivity traffic, handoff delay caused by channel contention for a long time period can degrade quality of service (QoS). In order for a cut-off phenomenon to be minimized in a hard handoff, a time period required for the channel contention in an access state must be minimized.

Therefore, the present invention has been designed in view of the above and other problems.

It is the object of the present invention to provide a handoff method in a mobile communication system based on frequency hopping-orthogonal frequency division multiplexing (FH-OFDM) for rapidly carrying out a handoff by making advanced reservation for a control channel necessary to be assigned a data channel associated with a handoff target base station, before the handoff is performed.

This object is solved by the subject matter of the independent claims.

Preferred embodiments are defined in the dependent claims.

It is an aspect of the present invention to provide a handoff method in a mobile communication system based on frequency hopping-orthogonal frequency division multiplexing (FH-OFDM) for rapidly performing a handoff by making advanced reservation for a control channel and a data channel associated with a handoff target base station, before the handoff is performed.

It is another aspect of the present invention to provide a handoff method in a mobile communication system based on frequency hopping-orthogonal frequency division multiplexing (FH-OFDM) for reducing handoff delay by minimizing channel contention when a hard handoff is performed.

It is another aspect of the present invention to provide a handoff method in a mobile communication system based on frequency hopping-orthogonal frequency division multiplexing (FH-OFDM) for improving quality of real-time traffic service sensitive to delay by minimizing handoff delay.

It is another aspect of the present invention to provide a handoff method in a mobile communication system based on frequency hopping-orthogonal frequency division multiplexing (FH-OFDM) for reducing a delay time caused by contention in an access state and minimizing total handoff delay by assigning a reserved channel without going through an access state for a channel to be assigned in a state transition process of a medium access control (MAC) layer when a handoff is performed.

It is yet another aspect of the present invention to provide a handoff method in a mobile communication system based on frequency hopping-orthogonal frequency division multiplexing (FH-OFDM) for preventing data loss and also performing a rapid handoff by forming a tunnel between base stations linked to a handoff, buffering data through the tunnel, and rapidly assigning a data channel without going through an access state in a medium access control (MAC) layer.

In one aspect of the present invention, the handoff method in a mobile communication system comprises: predicting, at a mobile host, a handoff on the basis of strength of transmission power of a serving base station; reserving a physical channel to at least one candidate base station for the handoff; determining a specific candidate base station as a target base station; releasing a channel associated with the serving base station; and communicating data with the target base station through the reserved physical channel.

In another aspect of the present invention, reserving the physical channel comprises: transmitting a host tunnel initiation message (H-TIN) from the mobile host to the serving base station; transmitting a tunnel initiation message (TIN) from the serving base station to at least one candidate base station according to the host tunnel initiation message (H-TIN); assigning the physical channel, at the candidate base station received the tunnel request message (TIN), for the mobile host; and transmitting channel information on the assigned physical channel from the candidate base station the mobile host.

In another aspect of the present invention, the handoff method in a mobile communication system based on frequency hopping-orthogonal frequency division multiplexing (FH-OFDM), comprises: predicting, at a mobile station, a handoff on the basis of strength of transmission power of a serving base station; transmitting a host tunnel initiation message (H-TIN) from the mobile host to the serving base station; transmitting a tunnel initiation message (TIN) from the serving base station to at least one candidate base station according to the host tunnel initiation message (H-TIN); reserving, at the candidate base station, a physical channel to at least one candidate base station for the handoff, establishing a tunnel between the serving base station and the candidate base station(s), activating a buffer for storing data received from the serving base station, and transmitting a channel information on the reserved physical channel; transmitting the channel information from the serving base station to the mobile host; determining, at the mobile host, a target base station among the candidate base station(s); transmitting a host handoff request message (H-HR) from the mobile host to the target base station through the reserved physical channel; identifying the target base station on the basis of information of the host handoff request message (H-HR); transmitting a handoff acknowledgement message (Hack) from the target base station to the mobile host if the target base station is identified so as to complete the handoff.

The above features, and advantages of the present invention will be more clearly understood from the following detailed description taken in conjunction with the accompanying drawings, in which:

FIG. 1 illustrates a state transition diagram of a media access control (MAC) layer at a handoff in a conventional mobile communication system based on frequency hopping-orthogonal frequency division multiplexing (FH-OFDM);

FIG. 2A is a table illustrating downlink channels to be assigned in an active state of the MAC layer;

FIG. 2B is a table illustrating uplink channels to be assigned in the active state of the MAC layer;

FIG. 3 is a message flow chart illustrating a handoff process in the conventional FH-OFDM based mobile communication system;

FIG. 4 is a message flow chart illustrating a handoff process in an FH-OFDM based mobile communication system in accordance with a preferred embodiment of the present invention; and

FIG. 5 is an explanatory diagram illustrating a process for estimating a propagation delay time for virtual synchronization in a handoff method in accordance with the present invention.

Preferred embodiments of the present invention will be described in detail herein below with reference to the annexed drawings. In a handoff method in accordance with the present invention, a mobile host can be assigned a data channel in an active state (e.g., ON or HOLD state) without contention, when a handoff is performed, by making advanced reservation for a control channel so that the data channel can be assigned before the handoff is performed. As described above, because the mobile host can be assigned the data channel without contention, the handoff can be rapidly performed and a temporary communication cut-off phenomenon can be prevented in both uplink and downlink directions.

In the handoff method in accordance with the present invention, a reverse handoff is performed according to an operation of a forward handoff in a form in which the forward handoff, when the mobile host does not recognize a handoff target base station, and the reverse handoff, when the mobile host recognizes the handoff target base station, are mixed.

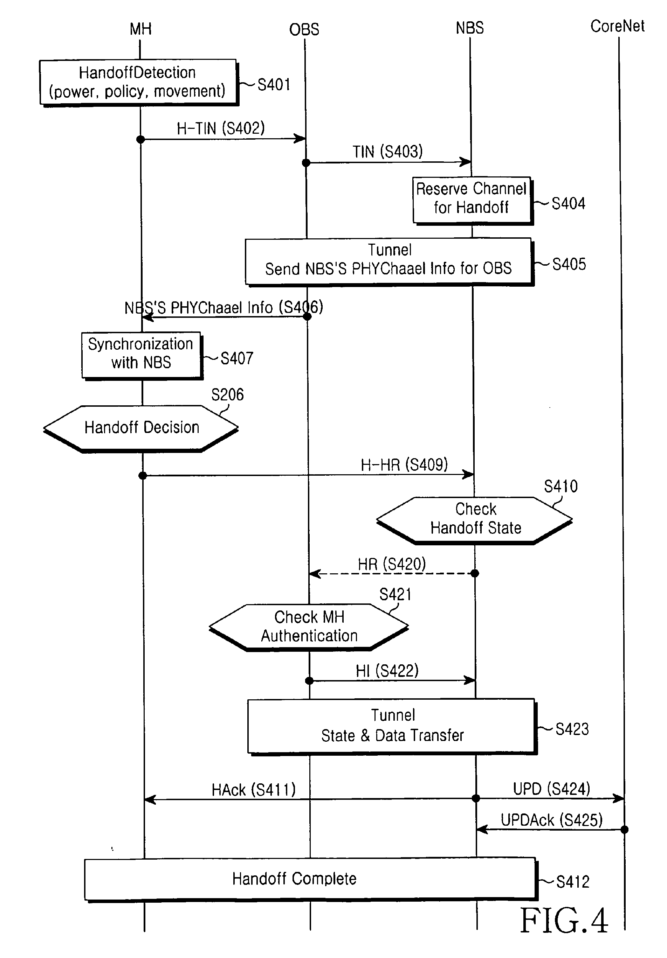

FIG. 4 is a message flow chart illustrating a handoff process in a mobile communication system based on frequency hopping-orthogonal frequency division multiplexing (FH-OFDM) in accordance with a preferred embodiment of the present invention. As illustrated in FIG. 4, a mobile host (MH) detects candidate base stations capable of performing a handoff, if a strength of a signal received from a serving base station OBS from which the service is provided drops below a predetermined level in step S401. The MH sends a host tunnel initiation (H-TIN) message including addresses of the candidate base stations to the serving base station OBS from which the service is currently provided in step S402. The serving base station OBS receiving the H-TIN message transmits a tunnel initiation (TIN) message to at least one candidate base station on the basis of an address of the at least one candidate base station included in the H-TIN message. The at least one candidate base station can include a plurality of candidate base stations. In this case, the TIN message is transmitted to all the candidate base stations.

The candidate base station NBS receiving the TIN message reserves a control channel for the handoff of the MH, that is, an uplink state transition request channel (ULSRCH) or an uplink dedicated control channel (ULDCCH), in step S404, and simultaneously sets up a tunnel with the currently serving base station OBS in step S405.

Each candidate base station reserves the ULSRCH where a media access control (MAC) state of the MH is in an ON state and reserves the ULDCCH where the MAC state of the MH is in a HOLD state.

The NBS sets up the tunnel and simultaneously prepares a buffer for receiving data. The serving base station OBS transmits the data to the MH and simultaneously transmits a copy of the data to the candidate base station NBS through the tunnel. The copy of the data is temporarily stored in the buffer of the candidate base station NBS, and prevents a data loss when the handoff is performed.

When the channel reservation is completed, each handoff candidate base station NBS transmits physical channel information such as its frequency hopping pattern, an initial time/frequency slot, a frame time difference between its own base station and the serving base station OBS, etc., to the serving base station OBS through the tunnel. The serving base station OBS sends the physical channel information to the MH in step S406.

Upon receiving the physical channel information, the MH virtual synchronizes with handoff candidate base stations in step S407, and selects one of the candidate base stations as a handoff target base station by considering the received physical channel information and a result of the virtual synchronization in step S408.

When the handoff target base station NBS is selected, a corresponding base station transmits a host handoff request (H-HR) message to a new base station through the control channel previously reserved for the MH, and makes a handoff request in step S409.

The description above is directed to the forward handoff when the MH does not recognize the handoff target base station. However, the reverse handoff is performed when the forward handoff is not performed.

The H-HR message includes handoff state information. The handoff target base station NBS receiving the H-HR message refers to the handoff state information included in the H-HR message, and determines whether the forward handoff has been performed in step S410. If the forward handoff has been performed, the handoff target base station NBS transmits a handoff acknowledgement (HAck) message to the MH in step S411 and completes the handoff in step S412.

However, when the MH recognizes the handoff target base station, the forward handoff process is not performed. In this case, the handoff target base station NBS transmits a handoff request (HR) message to the serving base station OBS in step S420.

The serving base station OBS receiving the HR message performs an MS authentication process in step S421, and transmits a handoff initiation (HI) message to the handoff target base station NBS in step S422. A tunnel is set up between the serving base station OBS and the handoff target base station NBS in step S423. If the serving base station OBS fails to perform the MS authentication process, it transmits a handoff denial (HD) message to the handoff target base station NBS. The handoff target base station NBS receiving the HD message repeatedly transmits the HR message to the serving base station OBS a predetermined number of times, until it receives the HI message.

When the tunnel has been set up, the handoff target base station NBS transmits an update route (UPD) message to the serving base station OBS through a core network CoreNet in step S424, and simultaneously transmits a handoff acknowledgement (HAck) message to the MH in step S411. The serving base station OBS receiving the UPD message transmits an update acknowledgement (UPDAck) message to the handoff target base station NBS in step S425 and completes the handoff in step S412.

The above-described virtual synchronization is needed for the MH to synchronize with the handoff candidate base station NBS and immediately use a reserved channel. Further, the virtual synchronization includes a process for estimating a propagation delay time "Tpd (NBS, MH)" associated with the candidate base stations.

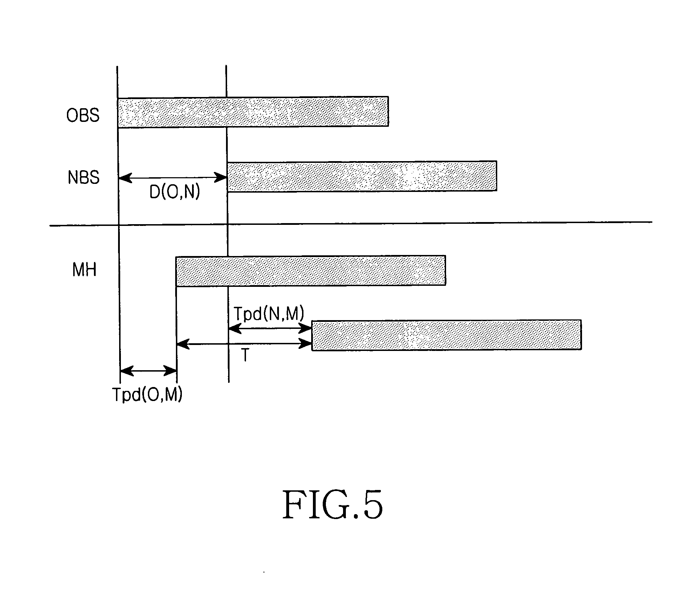

FIG. 5 is an explanatory diagram illustrating a process for estimating a propagation delay time for virtual synchronization in a handoff method in accordance with the present invention. As illustrated in FIG. 5, the process for estimating the propagation delay time includes measuring an arrival time difference "T" between signals from the serving base station OBS and the candidate base station NBS, adding a propagation delay time "Tpd (OBS, MH)" between the serving base station OBS and the mobile host MH to the measured signal arrival time difference "T", and subtracting a frame time difference "D (OBS, NBS)" between the serving base station OBS and the candidate base station NBS from a sum of the signal arrival time difference "T" and the propagation delay time "Tpd (OBS, MH)", thereby producing a propagation delay time "Tpd (NBS, MH)" between the candidate base station NBS and the mobile host MH. This can be expressed as illustrated in Equation 1a.

Equation 1a      Tpd (NBS, MH) = T + Tpd (OBS, MH) - D (OBS, NBS)

The propagation delay time "Tpd (NBS, MH)" is produced by subtracting the propagation delay time "Tpd (OBS, MH)" between the serving base station OBS and the mobile host MH from a frame time difference "D (OBS, NBS)" between the serving base station OBS and the candidate base station NBS and subtracting "{D (OBS, NBS) - Tpd (OBS, MH)}" from an arrival time difference "T" between data from the serving base station OBS and the candidate base station NBS. This is expressed in Equation 1b. A value produced by Equation 1b is the same as that produced by Equation 1a above.

Equation 1b      Tpd (NBS, MH) = T - {D (OBS, NBS) - Tpd (OBS, MH)}

Here, the frame time difference "D (OBS, NBS)" between the serving base station OBS and the candidate base station NBS can be recognized through propagation delay between the base stations on a wired link or through an analysis of parameters used at the time of performing a handoff and a learning operation. The mobile host MH can measure the arrival time difference "T" between data from the serving base station OBS and the candidate base station NBS and the propagation delay time "Tpd (OBS, MH)" between the serving base station OBS and the mobile host MH.

The produced propagation delay time as described above is physical channel information of a corresponding candidate base station. When the candidate base station is selected as a handoff target base station, a reserved channel can be immediately used in a state in which the mobile host MH and the target base station synchronize with each other.

As described above, the present invention provides a rapid, seamless handover method without data loss in a mobile communication system based on frequency hopping-orthogonal frequency division multiplexing (FH-OFDM) that reduces a delay time caused by contention in an access state and minimizes total handoff delay by assigning a reserved channel without going through an access state for a channel to be assigned in a state transition process of a medium access control (MAC) layer when a handoff is performed.

Moreover, the present invention provides a handoff method without data loss in a mobile communication system based on frequency hopping-orthogonal frequency division multiplexing (FH-OFDM) for preventing data loss and performing a rapid handoff by setting up a tunnel between base stations linked to a handoff, buffering data through the tunnel, and rapidly assigning a data channel without going through an access state in a medium access control (MAC) layer.

Although the preferred embodiments of the present invention have been disclosed for illustrative purposes, those skilled in the art will appreciate that various modifications, additions, and substitutions are possible, without departing from the scope of the present invention.

**Claims**

**1.**   A hard handoff method in a mobile communication system, comprising:

predicting a handoff at a mobile host, using strength of transmission power of a serving base station;
reserving a physical channel to at least one candidate base station for the handoff;
selecting a target base station from the at least one candidate base station; releasing a channel associated with the serving base station; and
communicating data with the target base station through the reserved physical channel.

**2.**   The hard handoff method as set forth in claim 1, further comprising the step of providing the mobile host with channel information on the reserved physical channel.

**3.**   The hard handoff method as set forth in claim 2, wherein the step of providing the mobile host with the channel information comprises:

establishing a tunnel between the serving base station and the at least one candidate base station;
transmitting the channel information from the at least one candidate base station to the serving base station through the tunnel; and
transmitting the channel information from the serving base station to the mobile host.

**4.** The hard handoff method as set forth in claim 2, wherein the channel information includes at least one of a frequency hopping pattern of the reserved physical channel, an initial time/frequency slot, and a frame time difference between the serving base station and the at least one candidate base station.

**5.** The hard handoff method as set forth in claim 2, further comprising the step of virtually synchronizing the mobile host and the at least one candidate base station using the channel information.

**6.** The hard handoff method as set forth in claim 5, wherein the step of virtually synchronizing the mobile host and the candidate base station comprises the step of measuring a reverse propagation delay from the at least one candidate base station to the mobile host.

**7.** The hard handoff method as set forth in claim 6, wherein the reverse propagation delay is obtained by subtracting a frame time difference at least one between the serving base station and the at least one candidate base station from a sum of an arrival time difference between data from the serving base station and the at least one candidate base station, and a propagation delay time between the serving base station and the mobile host.

**8.** The hard handoff method as set forth in claim 6, wherein the reverse propagation delay is obtained by subtracting a value, which is obtained by subtracting a frame time difference between the serving base station and the candidate base station from a propagation delay between the mobile host and the serving base station, from the arrival time difference between the serving base station and the candidate base station.

**9.** The hard handoff method as set forth in one of claims 1 to 8, wherein the step of reserving the physical channel comprises:

transmitting a host tunnel initiation message from the mobile host to the serving base station;
transmitting a tunnel initiation message from the serving base station to the at least one candidate base station according to the host tunnel initiation message;
assigning the physical channel, at the at least one candidate base station received the tunnel request message, for the mobile host; and
transmitting channel information on the assigned physical channel from the at least one candidate base station to the mobile host.

**10.** The hard handoff method as set forth in claim 9, wherein the step of transmitting the channel information comprises:

transmitting the channel information from the at least one candidate base station to the serving base station through a tunnel established between the serving base station and the at least one candidate base station; and
transmitting the channel information from the serving base station to the mobile host.

**11.** The hard handoff method as set forth in claim 9, wherein the step of reserving the physical channel further comprises:

virtually synchronizing the mobile host and the at least one candidate base station, if the mobile host receives the physical channel information.

**12.** The hard handoff method as set forth in claim 11, wherein the step of virtually synchronizing the mobile host and the at least one candidate base station comprises measuring a reverse propagation delay time Tpd from the candidate base station to the mobile host.

**13.** The hard handoff method as set forth in claim 12, wherein the reverse propagation delay is obtained by subtracting a frame time difference between the serving base station and the at least one candidate base station from a sum of an arrival time difference between data from the serving base station and the at least one candidate base station, and a propagation delay time between the serving base station and the mobile host.

**14.** The hard handoff method as set forth in claim 12, wherein the reverse propagation delay is obtained by subtracting a value, which is obtained by subtracting a frame time difference between the serving base station and the candidate base station from a propagation delay between the mobile host and the serving base station, from the arrival time difference between the serving base station and the candidate base station.

**15.** A handoff method in a mobile communication system utilizing frequency hopping-orthogonal frequency division multiplexing, comprising:

predicting a handoff at a mobile host, using strength of transmission power of a serving base station;
transmitting a host tunnel initiation message from the mobile host to the serving base station;
transmitting a tunnel initiation message from the serving base station to at least one candidate base station according to the host tunnel initiation message;
reserving, at the serving base station, a physical channel to the at least one candidate base station for the handoff;
establishing a tunnel between the serving base station and the at least one candidate base station;
activating a buffer for storing data received from the serving base station;
transmitting channel information on the reserved physical channel;
transmitting the channel information from the serving base station to the mobile host;
selecting, at the mobile host, a target base station from among the at least one candidate base station;
transmitting a host handoff request message from the mobile host to the target base station through the reserved physical channel;
identifying the target base station using information of the host handoff request message;
handing off the mobile host from the serving base station to the target base station, if the target base station is identified; and
transmitting a handoff acknowledgement message from the target base station to the mobile host.

**16.** The handoff method as set forth in claim 15, wherein the buffer temporarily stores a copy of data received from the serving base station.

**17.** The handoff method as set forth in claim 15 or 16, wherein the channel information includes at least one of a frequency hopping pattern of the reserved physical channel, an initial time/frequency slot, and a frame time difference between the serving base station and the at least one candidate base station.

**18.** The handoff method as set forth in one of claims 15 to 17, further comprising the step of virtually synchronizing the mobile host and the at least one candidate base station using the channel information.

**19.** The handoff method as set forth in claim 18, wherein the step of virtually synchronizing the mobile host and the at least one candidate base station comprises measuring reverse propagation delay from the at least one candidate base station to the mobile host.

**20.** The handoff method as set forth in claim 19, wherein the reverse propagation delay is obtained by subtracting a frame time difference between the serving base station and the candidate base station from a sum of an arrival time difference between data from the serving base station and the at least one candidate base station, and a propagation delay time between the serving base station and the mobile host.

**21.** The hard handoff method as set forth in claim 19, wherein the reverse propagation delay is obtained by subtracting a value, which is obtained by subtracting a frame time difference between the serving base station and the candidate base station from a propagation delay between the mobile host and the serving base station, from the arrival time difference between the serving base station and the candidate base station.

FIG.1

DOWNLINK CHANNELS

| STATE | DATA TRAFFIC | CONTROL | STATE TRANSTIONS |
|---|---|---|---|
| ACCESS | | | ACCESS GRANT (AGCH)<br>ACCESS EXCHANGE (AXCH) |
| ON | TRAFFIC (TCH) | TRAFFIC CONTROL (TCCH)<br>POWER CONTROL (PCCH)<br>BROADCASTING (BCH) | STATE TRANSTIONS (STCH) |
| HOLD | LIMITED TCH | TRAFFIC CONTROL (TCCH)<br>BROADCASTING (BCH) | STATE TRANSTIONS (STCH) |

# FIG.2A

EP 1 524 873 A2

UPLINK CHANNELS

| STATE | DATA TRAFFIC | CONTROL | STATE TRANSTIONS |
|---|---|---|---|
| ACCESS | | | ACCESS GRANT (AGCH) ACCESS EXCHANGE (AXCH) |
| ON | TRAFFIC (TCH) TRAFFIC ACK (TCH) | DEDICATED CONTROL (TCCH) TIMING CONTROL (ACH) | STATE TRANSTIONS ACK (STCH) |
| HOLD | TRAFFIC ACK (TCH) | TIMING CONTROL (ACH) | STATE TRANSTIONS ACK(STCH) STATE TRANSTIONS REQUEST (SRCH) |

FIG.2B

EP 1 524 873 A2

MH      OBS      NBS      CoreNet

HandoffDetection
(power, policy, movement) ~S204

H-TIN (S202)

TIN (S203)

Tunnel
State & Data Transfer
(Compressor, IGMP, QoS, AAA, IPSEC) ~S204

HH (S205)

S206

Handoff Decision

H-HR (S207)

S208

Check
Handoff State

HR (S209)

S210

Check MH
Authentication

HI (S211)

Tunnel
State & Data Transfer ~S212

HAck (S214)      UPD (S213)

UPDAck (S215)

Handoff Complete ~S220

FIG.3

MH　　　　　　　OBS　　　　　　　NBS　　　　　　CoreNet

HandoffDetection
(power, policy, movement) ～S401

H-TIN (S402)

TIN (S403)

Reserve Channel
for Handoff ～S404

Tunnel
Send NBS'S PHYChaael Info for OBS ～S405

NBS'S PHYChaael Info (S406)

Synchronization
with NBS ～S407

S206
Handoff Decision

H-HR (S409)

S410
Check
Handoff State

HR (S420)

S421
Check MH
Authentication

HI (S422)

Tunnel
State & Data Transfer ～S423

HAck (S411)　　　　　　UPD (S424)

UPDAck (S425)

Handoff Complete ～S412

FIG.4

FIG.5